# FASCICULE DE BREVET EUROPEEN

(11) **EP 2 544 303 B1**
(45) Date de publication et mention de la délivrance du brevet: **08.02.2017**
(21) Numéro de dépôt: 12173786.0
(22) Date de dépôt: 27.06.2012
(51) Int. Cl.: H01Q 9/04, G01M 13/04

(54) **Module de surveillance d'au moins une grandeur physique caractéristique de l'état d'un organe de guidage par contact comportant une antenne Pifa**
Überwachungsmodul mindestens einer physikalischen Größe des Zustands eines mit einer Pifa-Antenne ausgestatteten Kontaktsteuerorgans
Module for monitoring at least one physical magnitude that is characteristic of the state of a guiding member by contact comprising a PIFA antenna

(30) Priorité: 04.07.2011 FR 1156015
(43) Date de publication de la demande: 09.01.2013
(73) Titulaire: NTN-SNR Roulements, 74000 Annecy (FR)
(72) Inventeur: Bechevet, Delphine, 74330 Poisy (FR); Debiolles, Pascal, 74570 Thorens-Glieres (FR); Louhichi, Omar, 01200 Bellegarde Sur Valserine (FR)
(74) Mandataire: Alatis

(56) Documents cités:
- WO-A2-02/01086
- US-A1- 2003 030 565
- US-A1- 2005 212 710
- DEBATOSH GUHA: "Resonant Frequency of Circular Microstrip Antennas with and Without Air Gaps", IEEE TRANSACTIONS ON ANTENNAS AND PROPAGATION, IEEE SERVICE CENTER, PISCATAWAY, NJ, US, vol. 49, no. 1, 1 janvier 2001 (2001-01-01), XP011003943, ISSN: 0018-926X

## Description

### DOMAINE TECHNIQUE DE L'INVENTION

L'invention se rapporte à un module de surveillance d'au moins une grandeur physique caractéristique de l'état d'un organe de guidage par contact comportant une antenne PIFA, et également à un procédé d'optimisation d'un module de surveillance.

On entendra par organe de guidage par contact dans le cadre de la présente demande tout organe de guidage par glissement ou roulement pour un guidage linéaire ou rotatif. Sont en particulier visés les paliers rotatifs lisses ou à roulements, et notamment les paliers logés dans des boîtes de palier. Sont également visés les dispositifs de guidage linéaire, notamment du type comportant un plateau circulant sur une piste linéaire par glissement un plateau équipé de galets roulant sur une piste linéaire. Sont également visés les paliers linéaires, roulements linéaires et écrous de vis à billes.

### ETAT DE LA TECHNIQUE ANTERIEURE

Dans certaines applications, notamment en matière de transports publics, de production énergétique ou industrielle, les exigences de fiabilité et de disponibilité des installations sont particulièrement sévères. Ces exigences se traduisent par un besoin de surveillance des éléments d'usure de ces installations, et notamment des organes de guidage par contact tels que des paliers de guidage d'organes tournants, ou des paliers d'arbres d'alternateurs, ou encore d'essieux ferroviaires.

Or ces paliers ont une durée de vie potentielle extrêmement longue avant qu'un défaut n'apparaisse, qui peut par exemple être de plusieurs milliards de tours pour un palier à roulement, mais peut se trouver réduite dans des conditions de fonctionnement sévères. Le dysfonctionnement d'un palier à roulement peut avoir diverses origines, notamment un grippage, une usure, des fissures, des ruptures de cages, la corrosion ou l'écaillage, qui est une altération des surfaces des chemins de roulement ou des corps roulants, due à la fatigue de la matière.

Dans le domaine du transport ferroviaire, et en particulier dans le cas de train à grande vitesse, généralement, ce sont les contrôleurs qui détectent de manière auditive les roulements défectueux. Une déclaration de défaut est ensuiteremontée au service de maintenance qui se charge de programmer leurs changements.

Cependant, les roulements des essieux moteurs (sous motrices) ne sont pasdétectables par les contrôleurs. Leurs écaillages avancés peuvent alors conduire à des ruptures de cage susceptibles d'être la cause de déraillement.

Dans un tel contexte, il est alors nécessaire de disposer d'un dispositif de détection des défauts de roulements embarqués permettant alors la planification des opérations de maintenance dès la détection d'un début d'écaillage.

Une solution consiste alors à effectuer une maintenance préventive systématique en démontant les paliers à intervalles réguliers pour en vérifier l'état.

Cependant, une telle solution présente un inconvénient majeur lié au fait qu'une telle maintenance engendre un coût élevé d'immobilisation et une efficacité toute relative puisque la très grande majorité des paliers ainsi vérifiés sont sans défauts.

La surveillance en continu des paliers constitue donc un enjeu majeur pour la sureté de fonctionnement des installations, notamment en termes de disponibilité et de fiabilité.

Pour ce faire, on connaît dans l'état de l'art un système se rapportant à un module autonome de surveillance de mesure de grandeur physique équipant des véhicules de transport ferroviaire, capable d'enregistrer des paramètres physiques de roulement sous forme de données et de paramétrer un système de communication sans fil équipé d'une antenne fouet en vue de transmettre les données collectées vers une borne radio fréquence positionnée en bord de voie.

Cependant, l'utilisation d'une antenne fouet présente un inconvénient majeur lié à la fiabilité d'un tel système. En effet, l'environnement très métallique dans lequel est comprise cette antenne fouet est susceptible d'être à l'origine de risque important de désadaptation de cette antenne.

De plus, il est reconnu qu'une telle antenne n'est pas suffisamment robuste du point de vue mécanique pour pouvoir subir un éventuel choc lié à une projection de ballast.

Il est en effet fréquent, par temps froid, et lors de conditions climatiques neigeuses, que des ballasts situés en bord de voies et emprisonnés dans la neige ou la glace, soient projetés lors de croisement entre des véhicules ferroviaire.

Il est connu d'utiliser dans l'art antérieur, un tel module de surveillance de grandeur physique avec d'autres types d'antennes comme par exemple des antennes patch, des antennes dipôle imprimé ou encore des antennes à fente imprimé.

Toutefois, de telles antennes sont également très sensibles à un environnement métallique susceptible de perturber leur fonctionnement du fait de désadaptations fréquentes.

De plus, il serait difficilement envisageable de modifier la taille de ces antennes en vue de les intégrer dans module autonome de surveillance de mesure de grandeur physique équipant des véhicules de transport ferroviaire car en plus du phénomène de désadaptation, une limitation de taille a pour conséquence directe d'engendrer, pour ces antennes, une réduction de gain.

Le document WO 02/01086 A2 décrit un module de surveillance d'au moins une grandeur physique caractéristique de l'état d'un organe de guidage par contact et comprenant une antenne.

### EXPOSE DE L'INVENTION

L'invention vise à remédier à tout ou partie des inconvénients de l'état de la technique identifiés ci-dessus, et notamment à proposer des moyens pour permettre une surveillance d'un organe de guidage par contact, tel que par exemple un palier logé dans une boîte de palier via une liaison robuste de communication sans fil de courte distance.

L'invention offre une solution qui a pour avantage d'être peu couteuse et non intrusive car dans le cas par exemple d'un palier logé dans une boîte de palier à roulement logé dans une boîte d'essieu ferroviaire, elle ne requiert pas de modifier la boite d'essieux, évitant par exemple le paiement de coût de ré-homologation.

Dans ce dessein, un aspect de l'invention se rapporte à un module de surveillance d'au moins une grandeur physique caractéristique d'un organe de guidage par contact, ledit module comportant une antenne PIFA comprise à l'intérieur d'une cavité métallique tournée vers l'extérieur et fermée par un couvercle de protection en matériau transparent permissif aux ondes électromagnétiques, ladite antenne PIFA comprenant un élément rayonnant compris dans un substrat comportant plusieurs couches de matériau différent.

Selon des modes de réalisation particuliers :
- le module de surveillance comprend une pièce dans laquelle ladite cavité métallique est aménagée ;
- l'antenne PIFA est fixé sur un support métallique compris dans la cavité métallique ;
- l'antenne PIFA comporte un plan de masse qui est replié autour de l'élément rayonnant;
- le plan de masse comprend les tronçons de ligne 20, 19, 22, 27 et 17;
- l'élément rayonnant 21 est couplé aux différents tronçons de ligne 19, 27, 22, 20 et 17 du plan de masse par les capacités C1, C2, C3, C4 et C5;
- l'antenne PIFA comprend un tronçon de ligne d'alimentation 24 émanant de l'âme central d'un connecteur 10 et dont une des extrémités débouche dans une cavité circulaire 28 du tronçon de ligne 22 du plan de masse;
- le mécanisme d'alimentation est relié à ladite antenne PIFA à partir d'un connecteur du type choisie parmi l'un quelconque des éléments suivants : SMA (acronyme de SubMiniature version A), UMP ou encore UFL;
- l'élément rayonnant 21 est relié au tronçon de ligne d'alimentation 24;
- l'antenne PIFA comporte une capacité variable connectée en parallèle électriquement avec l'antenne PIFA entre l'âme centrale du connecteur 10 et le plan de masse;
- le couvercle de protection en matériau transparent permissif aux ondes électromagnétiques est réalisé en un matériau choisi parmi l'une des familles suivantes : PEHD (Polyéthylène Haute Densité) ou PEBD (Polyéthylène Basse Densité);
- le substrat est composé d'une couche d'un premier matériau comprise entre deux couches d'un deuxième matériau;
- le premier matériau appartient à la famille des PEHD, et le deuxième matériau à la famille des PTFE;
- le deuxième matériau est de l'Arlon « marque déposée » 25N;
- l'antenne présente un gain maximal à une fréquence de résonnance de 868Mhz;
- l'antenne présente les dimensions suivantes :
   - hauteur, c'est-à-dire l'épaisseur de l'antenne PIFA, est comprise entre 4mm et 20mm ;
   - longueur comprise entre 40mm et 60mm ;
   - largeur comprise entre 18mm et 20mm.
- l'élément rayonnant a une surface rectangulaire;
- ledit organe de guidage par contact étant un palier logé dans une boîte de palier, et
- la dite pièce est choisie parmi l'un des éléments suivants : un radiateur, ou encore un couvercle.

L'invention se rapporte également à un procédé d'optimisation d'un module de surveillance d'au moins une grandeur physique caractéristique d'un organe de guidage par contact, ledit procédé comprenant les étapes suivantes :
- intégration d'une antenne PIFA à l'intérieur d'une cavité métallique dudit module de surveillance tournée vers l'extérieur et fermée par un couvercle de protection en matériau transparent permissif aux ondes électromagnétiques, et
- configuration de ladite antenne PIFA comportant un plan de masse replié autour d'un élément rayonnant compris dans un substrat comprenant plusieurs couches de matériau différent.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'un module de surveillance selon un mode de réalisation de l'invention ;
- la figure 2, une vue de quatre modélisations différentes de la cavité métallique ;
- la figure 3A et 3B, une vue de côté de l'antenne PIFA;
- la figure 4, une vue de dessus de l'antenne PIFA;
- la figure 5, un graphe représentant le coefficient de réflexion en fonction de la fréquence de l'antenne PIFA située dans la cavité métallique;
- la figure 6, deux graphes représentant le coefficient de réflexion en fonction de la fréquence de l'antenne PIFA située dans la cavité métallique, avec ou sans un couvercle de protection en PEBD (Polyéthylène Basse Densité), et
- la figure 7, une vue électrique de l'antenne PIFA selon un mode de réalisation de la présente invention.

Pour plus de clarté, les éléments identiques ou similaires sont repérés par des signes de référence identiques sur l'ensemble des figures.

### DESCRIPTION DETAILLEE D'UN MODE DE REALISATION

La présente invention reprend toutes les caractéristiques techniques du module de surveillance 1 d'un organe de guidage par contact décrit dans les documents de demandes de brevet français NoFR1155993,NoFR1155994 et NoFR1155995.

Dans le présent mode de réalisation de l'invention, l'organe de guidage par contact considéré est un palier logé dans une boîte de palier à roulement logé dans une boîte d'essieu ferroviaire, mais ce mode de réalisation particulier n'a pas nécessairement de caractère limitatif.

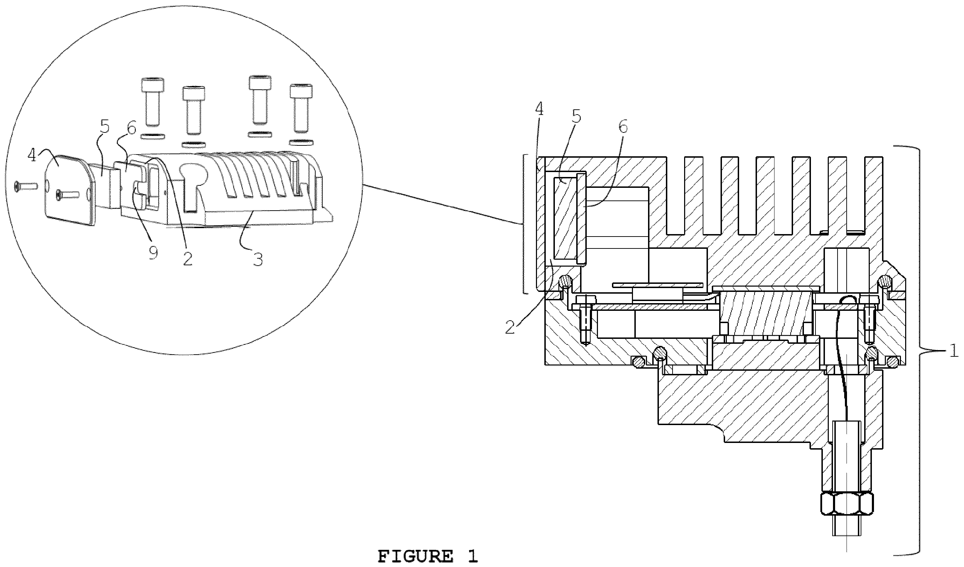

A la figure 1 est illustré le module de surveillance 1 d'au moins une grandeur physique caractéristique d'un organe de guidage par contact, tel qu'un palier logé dans une boîte de palier, composé de plusieurs briques technologiques décrites dans les documents de demandes de brevet français NoFR1155993, NoFR1155994 et NoFR1155995 et en particulier d'une brique de transmission d'un diagnostic de l'état du palier.

Cette brique de transmission d'un diagnostic de l'état du palier incorpore toute l'architecture technique permettant d'intégrer une antenne de transmission dans le module de surveillance et sa connexion à un module électronique de transmission (Wireless Sensor Nodes) par radiofréquence basse consommation.

Ce module de surveillance 1 comprend une antenne PIFA 5 comprise à l'intérieur d'une cavité métallique 2 tournée vers l'extérieur et fermée par un couvercle de protection 4 en matériau transparent permissif aux ondes électromagnétiques, au moins dans un domaine de fréquences correspondant à un gain maximal d'une antenne PIFA 5 (Planar Inverted-F Antenna).

Grâce à ce couvercle de protection 4, l'antenne PIFA 5 est protégée, notamment si le module de surveillance se trouve dans un milieu hostile tel qu'un bogie du véhicule ferroviaire.

Ce couvercle de protection 4 de l'antenne PIFA 5 est constitué d'un matériau de type PE (Polyéthylène), et a une épaisseur d'au moins 3mm.

Plus particulièrement, ce matériau est par exemple du PEBD (Polyéthylène Basse Densité) dont la permittivité diélectrique relative est de εr=2,10 et le facteur de perte diélectrique de tanδ=1,7.10⁻³ pour une fréquence de 869MHz.

L'avantage du PE, qu'il soit haute (HD) ou basse densité (BD) est qu'il possède sous l'effet d'un impact de bonne propriété de déformation sans se dégrader. Le PE a de plus un très bon comportement électromagnétique à une fréquence de 868MHz. Alors qu'au contraire des polymères de type plexiglas « marque déposée », à base de fibre de verre, sont cassants et sous l'effet d'un impact volent en éclat.

De manière alternative, le matériau constituant le couvercle de protection 4 de l'antenne PIFA 5 peut être un PEHD qui est plus rigide qu'un PEBD, et qui a de plus de très bonnes caractéristiques diélectriques.

La cavité métallique 2 est aménagée dans une pièce de ce module de surveillance. Cette pièce peut par exemple se rapporter à un couvercle ou encore un radiateur.

Dans le présent mode de réalisation cette pièce se rapporte de manière non limitative à un radiateur 3 de refroidissement à ailettes en alliage d'aluminium.

Dans le cas où cette pièce se rapporte à un radiateur 3, l'antenne PIFA de ce module de surveillance 1 est alors spécifiquement adaptée à la masse métallique constituée par ce radiateur 3.

De plus, l'intégration de l'antenne PIFA 5 dans la cavité métallique 2 est une intégration optimale car elle est réalisée dans la partie haute, le radiateur 3, et donc une partie haute qui est éloignée du couvercle de la boite d'essieux, source potentielle de désaccord d'antenne.

En complément, on notera que dans la cavité métallique l'antenne PIFA 5 est protégée de l'environnement extérieur tout en conservant la possibilité d'émettre de manière optimale vers un récepteur, par exemple une borne radiofréquence positionnée en bord de voie, situé à une distance relativement courte d'environ une dizaine de mètres.

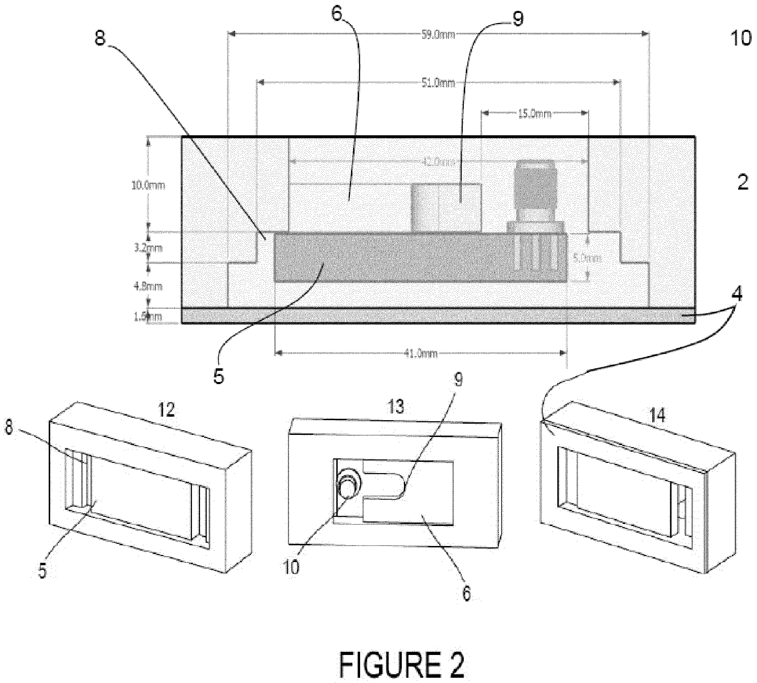

A la figure 2, est présenté une illustration de l'intégration et de la fixation de l'antenne PIFA dans la cavité métallique 2 à partir de la présentation de quatre modélisations différentes 11, 12, 13, 14 de cette cavité métallique 2.

Des aménagements particuliers sont réalisés dans la cavité métallique 2 afin d'assurer une fixation optimale de l'antenne PIFA 5 car selon la façon dont elle est positionnée dans la cavité métallique, l'antenne PIFA 5 ne rayonne pas de la même manière.

Afin de fixer l'antenne PIFA 5 dans la cavité métallique 2, un support métallique 6 est prévu comportant un usinage central 9.

Cet usinage central 9 est destiné à recevoir la connectique 10 lorsque, lors de la pose de l'antenne 5, l'antenne PIFA 5 est placée, puis glissée dans la cavité métallique 2 jusqu'à ce qu'une partie du plan de masse 20 soit en contact avec le support métallique 6 et le côté latéral de l'antenne PIFA 5 adjacent à ce plan de masse 20 soient placé en regard du coin 8 et sans contact avec ce coin 8 de la cavité métallique 2. Ainsi l'antenne PIFA est alors directement fixée sur le support arrière, par exemple à partir d'un moyen de fixation tel que de la colle.

On comprend, par ailleurs, que l'usinage central 9 est nécessaire notamment pour la connexion d'un câble afin de limiter les torsions au niveau de la connectique.

D'autre part, le mécanisme d'alimentation comporte une capacité variable permettant d'optimiser l'adaptation de l'antenne PIFA à la fréquence désirée lors de la mise en place de l'antenne PIFA dans la cavité métallique.

Cette capacité variable (varicap) est connectée en parallèle électriquement avec l'antenne 5, entre l'âme centrale du connecteur 10 et le plan de masse.

La capacité variable permet, au regard des tolérances de positionnement dans une telle cavité qui influent directement sur la qualité d'adaptation lors de la mise en place de l'antenne, de régler cette antenne PIFA 5 en fréquence pour que l'optimum du gain en transmission soit obtenu à la fréquence souhaitée : 868 MHz.

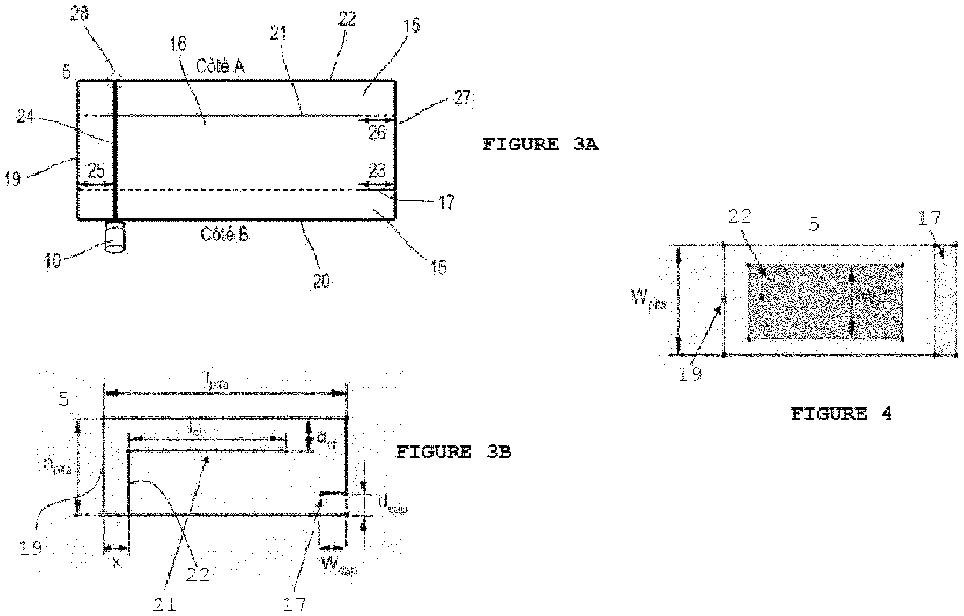

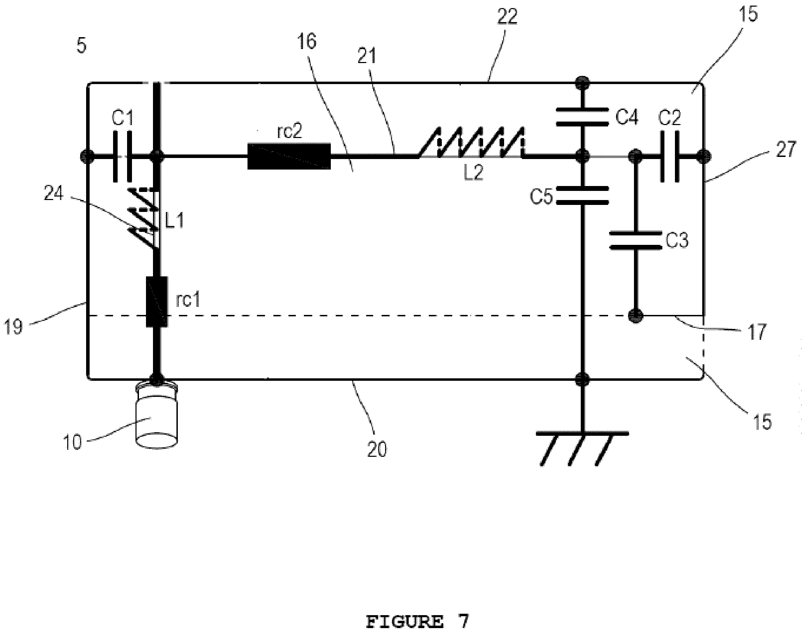

Aux figures 3A, 3B et 7 est illustrée une vue de côté de l'antenne PIFA 5, et à la figure 4 une vue du dessus de cette antenne 5.

Cette antenne PIFA comporte un élément rayonnant 21 planaire rectangulaire et un plan de masse qui est replié autour de l'élément rayonnant afin de réduire la dimension physique de l'antenne 5.

Dans un mode de réalisation, le plan de masse à une longueur électrique qui est choisie de telle manière à ce qu'elle résonne à 868 MHz. Ce plan de masse est composé d'une première partie 20, d'une partie latérale gauche 19, d'une partie repliée au-dessus de l'élément rayonnant 22, d'une partie latérale droite 27, et d'un retour de plan de masse matérialisé par la partie 17.

Cet élément rayonnant 21 est couplé aux différentes parties 20, 19, 22, 27 et 17 qui constituent ce plan de masse retourné, aux capacités suivantes :
- C1 entre le tronçon de ligne d'alimentation 24 et la partie du plan de masse latéral 19. Cette capacité participe au premier ordre à l'impédance électrique de l'antenne (50 Ohms);
- C2 entre l'élément rayonnant 21 et la partie du plan de masse latéral 27;
- C3 entre l'élément rayonnant 21 et la partie relative au retour du plan de masse 17;
- C4 entre l'élément rayonnant 21 et la partie du plan de masse 22, et
- C5 entre l'élément rayonnant 21 et la partie du plan de masse 20.

Cet élément rayonnant 21 est positionné au-dessus de la partie du plan de masse 20 et est relié à un mécanisme d'alimentation constitué d'une ligne d'alimentation 24 et d'un connecteur 10.

A la figure 7, la ligne d'alimentation 24 et l'élément rayonnant 21 constituent le pôle « plus » de cette antenne PIFA et sont représentés par deux inductances L1 et L2 et deux résistances en séries rc1 et rc2.

Ces résistances rc1 et rc2 sont témoins des pertes par effet joule dues à la nature du conducteur qui dans ce mode de réalisation, non limitatif, est en cuivre.

Les inductances L1 et L2 traduisent l'effet inductif des composants de l'élément rayonnant 21 et de la ligne d'alimentation 24, et participent à l'impédance « vue » par le connecteur 10.

Le mécanisme d'alimentation correspond à un module de transmission radio fréquence permettant de transmettre des informations issues du module de surveillance.

La première extrémité du tronçon de ligne d'alimentation 24 émane de l'âme centrale du connecteur 10 de type par exemple SMA, et la deuxième extrémité débouche dans une cavité circulaire 28 du tronçon de ligne 22 du plan de masse à une distance circulaire minimale d'environ 1 mm. Ce tronçon de ligne d'alimentation 24 a pour rôle de maintenir mécaniquement l'élément rayonnant 21.

Le plan de masse comprend une partie repliée 22 parallèlement à la partie du plan de masse 20, de façon à réduire la taille de l'antenne PIFA 5, tout en conservant une même longueur électrique. Cette longueur électrique étant choisie pour faire résonner l'antenne à 868 MHz.

Cette partie parallèle 22 a un effet capacitif sur l'impédance d'entrée de l'antenne PIFA 5, et participe avec l'inductance L1 et L2 à l'impédance d'entre vue par le connecteur 10.

La partie repliée 22 comporte un retour de plan de masse correspondant au tronçon de ligne 17. La longueur de ce tronçon de ligne 17 est une variable d'ajustement pour l'adaptation de l'antenne PIFA 5 en fréquence c'est-à-dire le centrage de la fréquence de rayonnement à 868 MHz et l'amplitude mini du coefficient de réflexion S11 de cette antenne PIFA.

Cette variable est une variable d'ajustement principale qui permet d'ajuster précisément l'antenne 5. L'objectif est alors d'obtenir une impédance électrique de 50 Ohms et une minimisation de la valeur du coefficient de réflexion S11 à la fréquence souhaitée (868 MHz). En conséquence, le coefficient de transmission est maximisé.

Le principe de fonctionnement de l'antenne est le suivant : l'alimentation électrique de l'élément rayonnant provoque la création de courants électriques dans cet élément qui, par couplage capacitif et inductif avec le plan de masse replié et effet inductif, provoque l'excitation des courants de surface de ce plan de masse. Le rayonnement de cette antenne est hémisphérique coté A mais également du coté B (mais de moindre amplitude). Cette antenne rayonne principalement vers le coté A (positionnée en regard de la paroi de protection) mais également de part sa conception vers l'arrière (coté B).

On notera, que la variation des paramètres dimensionnant l'antenne PIFA permettent de la configurer de manière optimale.

Ainsi, trois de ces paramètres dimensionnant l'antenne PIFA sont représentés à la figures 3A et ont pour caractéristiques suivantes pour :
- le paramètre 25, il correspond à la distance entre ligne d'alimentation et la face latérale de plan de masse 19. Cette distance dimensionne au premier ordre l'impédance d'entrée de l'antenne. Elle doit être de 50 Ohms pour être adaptée ;
- le paramètre 26, il correspond à la distance entre l'élément rayonnant 21 et partie 27 du plan de masse. Cette distance participe également à l'impédance d'entrée de l'antenne mais a une moindre influence que le paramètre 25.
- le paramètre 23, il correspond à la longueur de la partie 17 du plan de masse. Cette longueur constitue une variable d'ajustement principale permettant d'ajuster précisément l'antenne en fréquence. L'objectif est d'obtenir préférentiellement une impédance électrique de 50 Ohms et une minimisation de la valeur du coefficient de réflexion S11 à la fréquence souhaitée (868 MHz). En conséquence, le coefficient de transmission est maximisé.

L'élément rayonnant 21 est compris dans un substrat comportant plusieurs couches 15,16 de matériau différent. Cette élément rayonnant 21 se rapporte à du cuivre dont l'épaisseur est de 35 µm.

Plus particulièrement, ce substrat est composé d'une couche 16 d'un premier matériau d'épaisseur de 3.2 mm comprise entre deux couches 15 d'un deuxième matériau d'épaisseur 800µm chacune.

Dans l'état de l'art il est connu qu'une antenne PIFA ne comporte pas de matériau autre que du métal, et de substrat constitué d'air.

Le fait d'utiliser dans le cadre de la présente invention, des matériaux autres que l'air, et dont les caractéristiques électromagnétiques sont la permittivité εᵣ et la perméabilité µᵣ permet de réduire la taille physique de l'antenne.

Le substrat, selon l'invention, comprend un empilement d'au moins deux matériaux diélectriques, de différentes épaisseurs et de différentes valeurs de permittivités complexes à 868 MHz.

Dans le mode de réalisation selon l'invention, le premier matériau appartient à la famille des PEHD (Polyethylene Haute Densite), et le deuxième matériau à la famille des PTFE (Polytétrafluoroéthylène).

Dans le présent mode de réalisation, le premier matériau est un plastique inerte et le deuxième matériau correspond à de l'Arlon « marque déposée » 25N.

Le PEHD a une permittivité diélectrique relative de εr=2,16 et un facteur de perte diélectrique tanδ=1.10⁻³ à une fréquence de 868MHz.

Cet agencement des matériaux est un très bon compromis coût et disponibilité des matières.

Un avantage lié à l'utilisation d'un tel substrat comportant plusieurs couches 15,16 de matériau différent est lié au fait qu'il permet de réduire la taille physique de l'antenne. De plus, un autre avantage de ce substrat se rapporte également au fait qu'elle permet une tenue mécanique optimale de l'élément rayonnant à une distance contrôlée du plan de masse.

On notera en particulier qu'un autre dimensionnement de cette antenne PIFA 5 est également possible en utilisant un substrat composé de 100% d'Arlon « marque déposée » ou 100% de PEHB.

Par ailleurs, de tels matériaux utilisés dans le substrat présentent tous deux des caractéristiques électromagnétique de très bonne qualité à 868 MHz (fréquences de fonctionnement voulues de l'antenne) : facteur de perte étant inférieur à 5. 10⁻³.

De manière non limitative, les dimensions de l'antenne PIFA sont précisées dans le tableau 1 ci-après.

**Tableau 1**

| **Caractéristiques de l'Antenne PIFA** | | |
|---|---|---|
| | ***Description*** | ***Dimensions (mm)*** |
| Hpifa | Hauteur de l'antenne PIFA | 4,8 |
| Lpifa | Longueur de l'antenne PIFA | 41 |
| Lcf | Longueur de l'élément rayonnant | 38 |
| Dcf | Epaisseur de la couche en PTFE (Arlon « marque déposée » 25N) | 0,8 |
| Dcap | Epaisseur de la couche en PTFE (Arlon « marque déposée » 25N) | 0,8 |
| Wcap | Largeur de la charge capacitive | 2,1 |
| Wpifa | Largeur de l'antenne PIFA | 18 |
| Wcf | Largeur de l'élément rayonnant | 16 |
| X | court-circuit et le point d'alimentation (adapté à 50 Ω) | 0, 6 |

Dans le cadre de la réalisation de cette antenne PIFA, les valeurs de ce tableau, relatives aux caractéristiques de cette antenne peuvent variées selon une tolérance de fabrication pouvant aller jusqu'à quelques dixièmes de millimètres.

La connectique 10 de l'antenne PIFA 5 permet de la relier au mécanisme d'alimentation et au module électronique de transmission (Wireless Sensor Nodes).

Elle correspond à un connecteur 10 adaptée à 50 ohms, pouvant être du type SMA 10 (acronyme de SubMiniature version A), UMP 10 (acronyme de « Ultra Miniature Pressure contact ») ou encore UFL 10 (acronyme de « Ultra FLexible »).

Dans le présent mode de réalisation la connectique 10 de l'antenne PIFA se rapporte à des connectiques bas profil, donc du type UMP ou encore UFL. De telles connectiques permettent d'obtenir une meilleure intégration de l'antenne PIFA 5 dans la cavité métallique 2 grâce à leur faible encombrement.

Un avantage de cette antenne PIFA 5 est d'avoir un comportement omni-directionnelle avec des valeurs de gain suffisantes assurant une performance adéquate à des propagations à l'intérieur de la cavité métallique en tenant compte des valeurs de puissance de sortie et de la sensibilité en réception du dispositifs radio à courte portée.

Ainsi, l'antenne PIFA 5 a la capacité de recevoir aussi bien des ondes électromagnétiques polarisées verticalement qu'horizontalement ce qui est fort avantageux dans des environnements intérieurs où la dépolarisation est un phénomène dominant et le choix de la polarisation difficile, comme cela peut être le cas dans une cavité métallique 2.

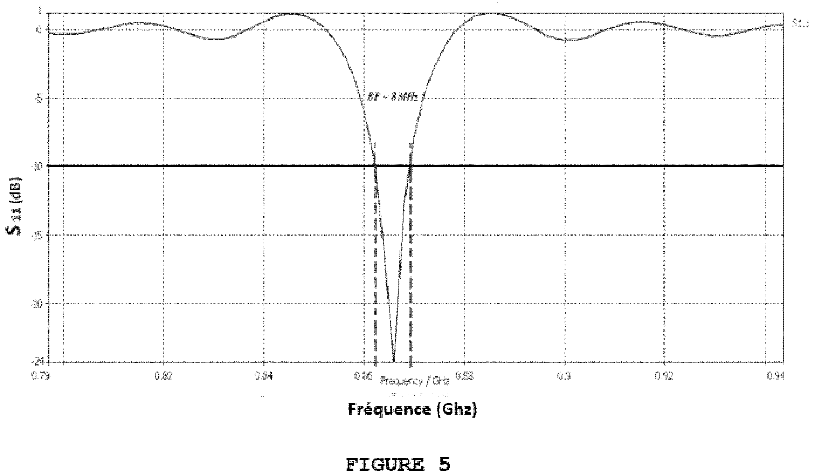

Ainsi qu'il est illustré à la figure 5, l'antenne PIFA 5, fixée dans la cavité métallique 2, présente un gain maximal à une fréquence de résonnance de 868MHz, avec une bande passant de 8Mhz.Sinécessaire, la fréquence de résonnance peut être augmentée pour compenser l'utilisation du couvercle de protection 4.

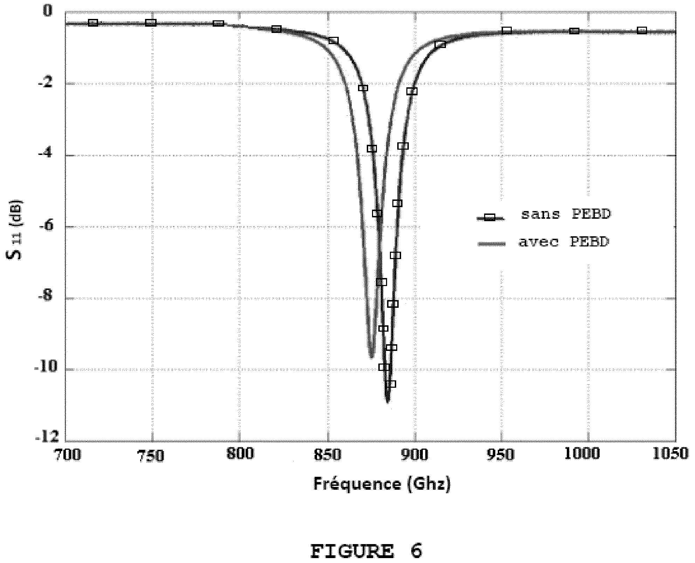

Ainsi, à la figure 6 on peut voir l'influence du couvercle de protection 4 en PEBD d'épaisseur 3.2 mm placé face à l'antenne PIFA émettrice fixée à l'intérieur de la cavité métallique 2. Cette antenne PIFA émet alors à une fréquence de 868 MHz.

On comprend donc que cette fréquence de résonance peut être décalée en ajoutant un matériau diélectrique face à l'antenne PIFA (5).

Par exemple, 3 mm de FR4 avec une permittivité diélectrique relative de εr=4.5, ajouté en façade sur le couvercle de protection de PEBD provoque un décalage en fréquence portant la fréquence d'émission de 878 MHz à 868 MHz.

Un résultat similaire peut être obtenu en choisissant un couvercle de protection ayant une permittivité diélectrique plus élevée que l'actuelle PEBD ou encore une épaisseur de protection plus conséquente.

De mêmes effets susceptibles de faire varier la bande passante peuvent être obtenus en modifiant l'épaisseur de l'antenne PIFA 5.

Cette antenne PIFA est assemblée selon les étapes suivantes :
- dépôt des matières conductrices sur le substrat 15,16 se rapportant aux parties de plan de masse 20 et 22 du plan de masse sur les flancs horizontaux ;
- perçage des matériaux 15 et 16 du substrat permettant la matérialisation de la ligne 24 avant métallisation;
- empilement des différentes couches de matériaux du substrat ;
- plaquage et pressage des matières conductrices constituées du plan de masse et de l'élément rayonnant sur les flans verticaux de l'antenne PIFA, et
- métallisation du trou de perçage du substrat permettant de réaliser la ligne 24, et
- soudure du connecteur 10 sur le tronçon de ligne 20 du plan de masse.

Dans le présent mode de réalisation de la présente invention, le réglage de l'antenne en fréquence peut se faire de manière itérative à partir d'étapes de mesure de la fréquence de l'antenne dans la cavité et de correction apportée par varicap.

## Revendications

1. Module de surveillance d'au moins une grandeur physique caractéristique de l'état d'un organe de guidage par contact comportant une antenne PIFA caractérisé en qu'il comprend une antenne PIFA (5) comprise à l'intérieur d'une cavité métallique (2) tournée vers l'extérieur et fermée par un couvercle de protection (4) en matériau transparent permissif aux ondes électromagnétiques, ladite antenne PIFA (5) comprenant un élément rayonnant (21) compris dans un substrat comportant plusieurs couches de matériau différent.

2. Module de surveillance selon la revendication précédente, **caractérisé en ce que** le module de surveillance comprend une pièce (3) dans lequel ladite cavité métallique (2) est aménagée.

3. Module de surveillance selon l'une quelconque des revendications précédentes, **caractérisé en ce que** l'antenne PIFA (5) est fixée sur un support métallique(6) compris dans la cavité métallique (2).

4. Module de surveillance selon l'une quelconque des revendications précédentes, **caractérisé en ce que** ladite antenne PIFA (5) comporte un plan de masse qui est replié autour de l'élément rayonnant.

5. Module de surveillance selon la revendication 4, **caractérisé en ce que** le plan de masse comprend une première partie (20), une partie latérale gauche (19), une partie repliée au-dessus de l'élément rayonnant (22), une partie latérale droite (27) et un retour de plan de masse matérialisé par une partie (17).

6. Module de surveillance selon la revendication précédente, **caractérisé en ce que** l'élément rayonnant (21) est couplé à la partie latérale gauche (19), à la partie latérale droite (27), à la partie repliée au-dessus de l'élément rayonnant (22), à la première partie (20) et à la partie (17)du plan de masse par des capacités C1, C2, C3, C4 et C5.

7. Module de surveillance selon l'une quelconque des revendications 4 à 6, **caractérisé en ce que** ladite antenne PIFA (5) comprend une ligne d'alimentation (24) émanant de l'âme central d'un connecteur (10) et dont une des extrémités débouche dans une cavité circulaire (28) du tronçon de ligne(22) du plan de masse.

8. Module de surveillance selon la revendication précédente, **caractérisé en ce que** l'élément rayonnant (21) est relié à la ligne d'alimentation (24).

9. Module de surveillance selon la revendication précédente, **caractérisé en ce que** un mécanisme d'alimentation constitué d'une ligne d'alimentation 24 et d'un connecteur 10 est relié à ladite antenne PIFA (5) à partir du connecteur (10) du type choisi parmi l'un quelconque des éléments suivants : SMA (acronyme de SubMiniature version A), UMP ou encore UFL.

10. Module de surveillance selon l'une quelconque des revendications 4 à 9, **caractérisé en ce que** ladite antenne PIFA (5) comporte une capacité variable connectée en parallèle électriquement avec l'antenne PIFA (5), entre l'âme centrale du connecteur (10) et le plan de masse.

11. Module de surveillance selon l'une quelconque des revendications précédentes, **caractérisé en ce que** le couvercle de protection (4) en matériau transparent permissif aux ondes électromagnétiques est réalisé en un matériau choisi parmi l'une des familles suivantes : PEHD (Polyéthylène Haute Densité) ou PEBD (Polyéthylène Basse Densité).

12. Module de surveillance selon l'une quelconque des revendications précédentes, **caractérisé en ce que** le substrat est composé d'une couche (16) d'un premier matériau comprise entre deux couches (15) d'un deuxième matériau.

13. Module de surveillance selon la revendication précédente, caractérisé en ce quele premier matériau appartient à la famille des PEHD, et le deuxième matériau à la famille des PTFE.

14. Module de surveillance selon la revendication précédente, **caractérisé en ce que** le deuxième matériau est de l'Arlon 25N.

15. Module de surveillance selon l'une quelconque des revendications précédentes, **caractérisé en ce que** l'antenne PIFA (5) est configurée pour obtenir un gain maximal à une fréquence de résonnance de 868Mhz.

16. Module de surveillance selon l'une quelconque des revendications précédentes, **caractérisé en ce que** l'antenne PIFA (5) présente les dimensions suivantes :
- hauteur comprise entre 4mm et 20mm ;
- longueur comprise entre 40mm et 60mm ;
- largeur comprise entre 18mm et 20mm.

17. Module de surveillance selon l'une quelconque des revendications précédentes, **caractérisé en ce que** l'élément rayonnant (21) a une surface rectangulaire.

18. Module de surveillance selon l'une quelconque des revendications précédentes, **caractérisé en ce que** la dite pièce est choisie parmi l'un des éléments suivants : radiateur, ou encore couvercle.

19. Module de surveillance selon l'une quelconque des revendications précédentes, **caractérisé en ce que** ledit organe de guidage par contact est un palier logé dans une boîte de palier.

20. Procédé d'optimisation d'un module de surveillance d'au moins une grandeur physique caractéristique d'un organe de guidage par contact **caractérisé en ce qu'**il comprend les étapes suivantes :
- intégration d'une antenne PIFA (5) à l'intérieur d'une cavité métallique (2) dudit module de surveillance tournée vers l'extérieur et fermée par un couvercle de protection (4) en matériau transparent permissif aux ondes électromagnétiques, et
- configuration de ladite antenne PIFA (5) comportant un plan de masse replié autour d'un élément rayonnant compris dans un substrat comprenant plusieurs couches de matériau différent.

## Claims

1. A module for monitoring at least one physical magnitude that is characteristic of the state of a contact guide member comprising a PIFA antenna, **characterized in that** it comprises a PIFA antenna (5) accommodated inside a metallic cavity (2) facing outwards and closed by a protective cover (4) made of an electromagnetic waves-permissive transparent material, with said PIFA antenna (5) comprising a radiating element (21) accommodated in a substrate having several layers of different materials.

2. A monitoring module according to the preceding claim, **characterized in that** the monitoring module comprises a part (3) in which said metallic cavity (2) is arranged.

3. A monitoring module according to any one of the preceding claims, **characterized in that** the PIFA antenna (5) is attached on a metallic support (6) accommodated in the metallic cavity (2).

4. A monitoring module according to any one of the preceding claims, **characterized in that** said PIFA antenna (5) comprises a ground plane which is folded about the radiating element.

5. A monitoring module according to claim 4 **characterized in that** the ground plane comprises a first part (20), a left side part (19), a part folded over the radiating element (22), a right side part (27) and a ground plane back fold materialized by a part (17).

6. A monitoring module according to the preceding claim, **characterized in that** the radiating element (21) is coupled to the left side part (19), to the right side part (27), to the part folded over the radiating element (22), to the first part (20) and to the part (17) of the ground plane through capacitors C1, C2, C3, C4 and C5.

7. A monitoring module according to any one of claims 4 to 6, **characterized in that** said PIFA antenna (5) comprises a power supply line (24) from the central core of a connector (10) and one end of which opens into a circular cavity (28) of the line section (22) of the ground plane.

8. A monitoring module according to the preceding claim, **characterized in that** the radiating element (21) is connected to the power supply line (24).

9. A monitoring module according to the preceding claim, **characterized in that** a power supply mechanism consisting of a power supply line (24) and a connector (10) is connected to said PIFA antenna (5) from the connector (10) of the type selected from any one of the following elements: SMA (the acronym for SubMiniature Version A), UMP or still UFL.

10. A monitoring module according to any one of claims 4 to 9, **characterized in that** said PIFA antenna (5) comprises a variable capacitor electrically connected in parallel with the PIFA antenna (5), between the central core of the connector (10) and the ground plane.

11. A monitoring module according to any one of the preceding claims, **characterized in that** the protective cover (4) made of the electromagnetic waves-permissive transparent material is made of a material selected from one of the following families: HDPE (High Density Polyethylene) or LDPE (Low Density Polyethylene).

12. A monitoring module according to any one of the preceding claims, **characterized in that** the substrate consists of a layer (16) made of a first material sandwiched by two layers (15) made of a second material.

13. A monitoring module according to the preceding claim, **characterized in that** the first material belongs to the HDPE family, and the second material to the PTFE family.

14. A monitoring module according to the preceding claim, **characterized in that** the second material is Arlon 25N.

15. A monitoring module according to any one of the preceding claims, **characterized in** the PIFA antenna (5) is so configured as to reach a maximum gain at a resonance frequency of 868MHz.

16. A monitoring module according to any one of the preceding claims, **characterized in that** the PIFA antenna (5) has the following dimensions:
- height ranging from 4mm to 20mm;
- length ranging from 40mm to 60mm;
- width ranging from 18mm to 20mm.

17. A monitoring module according to any one of the preceding claims, **characterized in that** the radiating element (21) has a rectangular surface.

18. A monitoring module according to any one of claims 2 to 17, **characterized in that** said part is selected from one of the following elements: a radiator, or still a cover.

19. A monitoring module according to any one of the preceding claims, **characterized in that** said contact guide member is a bearing positioned in a bearing box.

20. A method for optimizing a module for monitoring at least one physical magnitude that is characteristic of a contact guide member, **characterized in that** it comprises the following steps:
- integration of a PIFA antenna (5) inside a metallic cavity (2) of said monitoring module facing outwards and closed by a protective cover (4) made of an electromagnetic waves-permissive transparent material, and
- configuration of said PIFA antenna (5) having a ground plane folded about a radiating element accommodated in a substrate comprising several layers of different materials.

## Patentansprüche

1. Überwachungsmodul für mindestens eine physikalische Größe, die charakteristisch für den Status eines Kontaktführungselements mit PIF-Antenne ist, **dadurch gekennzeichnet, dass** es eine PIF-Antenne (5) im Innern eines nach außen gewandten metallischen Hohlraums (2) aufweist, und durch einen Schutzdeckel (4) aus transparentem Material, das permissiv gegenüber elektromagnetische Wellen ist, geschlossen wird, wobei besagte PIF-Antenne (5) ein Strahlungselement (21) umfasst, das in einem Träger mit unterschiedlichen Materialschichten enthalten ist.

2. Überwachungsmodul nach dem vorhergehenden Anspruch, **dadurch gekennzeichnet, dass** das Überwachungsmodul ein Teil (3) umfasst, in dem der besagte metallische Hohlraum (2) angeordnet ist.

3. Überwachungsmodul nach einem der vorhergehenden Ansprüche, **dadurch gekennzeichnet, dass** die PIF-Antenne (5) auf einer metallischen Halterung (6) befestigt ist, die sich im metallischen Hohlraum (2) befindet.

4. Überwachungsmodul nach einem der vorhergehenden Ansprüche, **dadurch gekennzeichnet, dass** besagte PIF-Antenne (5) eine Massefläche enthält, die um das Strahlungselement gelegt ist.

5. Überwachungsmodul nach Anspruch 4, **dadurch gekennzeichnet, dass** die Massefläche ein erstes Teil (20), ein seitliches linkes Teil (19), ein über das Strahlungselement (22) gefaltetes Teil, ein seitliches rechtes Teil (27) und einen Rücklauf der Massefläche, der durch ein Teil (17) gebildet wird, umfasst.

6. Überwachungsmodul nach dem vorhergehenden Anspruch, **dadurch gekennzeichnet, dass** das Strahlungselement (21) über Kapazitäten C1, C2, C3, C4 und C5 an das seitliche linke Teil (19), an das seitliche rechte Teil (27), an das über das Strahlungselement (22) gefaltete Teil an das erste Teil (20) und an das Teil (17) der Massefläche gekoppelt ist.

7. Überwachungsmodul nach einem der Ansprüche 4 bis 6, **dadurch gekennzeichnet, dass** besagte PIF-Antenne (5) eine Speiseleitung (24) enthält, die vom Kern eines Verbinders (10) kommt und deren eines Ende in einen kreisförmigen Hohlraum (28) des Leistungsabschnitts (22) der Massefläche führt.

8. Überwachungsmodul nach dem vorhergehenden Anspruch, **dadurch gekennzeichnet, dass** das Strahlungselement (21) mit der Speiseleitung (24) verbunden ist.

9. Überwachungsmodul nach dem vorhergehenden Anspruch, **dadurch gekennzeichnet, dass** ein Versorgungsmechanismus bestehend aus einer Speiseleitung 24 und einem Verbinder 10 mit besagter PIF-Antenne (5) ausgehend vom Verbinder (10), welcher aus einem der folgenden Elemente, nämlich SMA (Akronym für SubMiniature Version A), UMP oder UFL, ausgesucht werden kann, verbunden ist.

10. Überwachungsmodul nach einem der Ansprüche 4 bis 9, **dadurch gekennzeichnet, dass** besagte PIF-Antenne (5) eine veränderliche Kapazität umfasst, die zwischen dem Kern des Verbinders (10) und der Massefläche elektrisch parallel zur PIF-Antenne (5) geschaltet ist.

11. Überwachungsmodul nach einem der vorhergehenden Ansprüche, **dadurch gekennzeichnet, dass** der Schutzdeckel (4) aus transparentem Material, das gegenüber elektromagnetischen Wellen permissiv ist, aus einem Material hergestellt ist, das aus den folgenden Materialgruppen ausgewählt wird: HDPE (Hochdichtes Polyethylen) oder LDPE (Polyethylen mit niedriger Dichte).

12. Überwachungsmodul nach einem der vorhergehenden Ansprüche, **dadurch gekennzeichnet, dass** der Träger aus einer Schicht (16) eines ersten Materials besteht, die sich zwischen zwei Schichten eines zweiten Materials befindet.

13. Überwachungsmodul nach dem vorhergehenden Anspruch, **dadurch gekennzeichnet, dass** das erste Material zur Familie der HDPE und das zweite Material zur Familie der PTFE gehört.

14. Überwachungsmodul nach dem vorhergehenden Anspruch, **dadurch gekennzeichnet, dass** das zweite Material Arlon 25N ist.

15. Überwachungsmodul nach einem der vorhergehenden Ansprüche, **dadurch gekennzeichnet, dass** die PIF-Antenne (5) so konfiguriert ist, dass auf einer Resonanzfrequenz von 868Mhz eine maximale Verstärkung erzielt wird.

16. Überwachungsmodul nach einem der vorhergehenden Ansprüche, **dadurch gekennzeichnet, dass** die PIF-Antenne (5) folgende Größen aufweist:
- Höhe zwischen 4 mm und 20 mm;
- Länge zwischen 40 mm und 60 mm;
- Breite zwischen 18 mm und 20 mm.

17. Überwachungsmodul nach einem der vorhergehenden Ansprüche, **dadurch gekennzeichnet, dass** das Strahlungselement (21) eine rechteckige Fläche aufweist.

18. Überwachungsmodul nach einem der vorhergehenden Ansprüche, **dadurch gekennzeichnet, dass** das besagte Teil aus den folgenden Elementen ausgewählt wird: ein Kühlkörper oder ein Deckel.

19. Überwachungsmodul nach einem der vorhergehenden Ansprüche, **dadurch gekennzeichnet, dass** besagtes Kontaktführungsorgan ein Lager ist, das sich in einem Lagergehäuse befindet.

20. Verfahren zur Optimierung eines Überwachungsmoduls für mindestens eine physikalische Größe, die für ein Kontaktführungsorgan charakteristisch ist, **dadurch gekennzeichnet, dass** es folgende Schritte umfasst:
- den Einbau einer PIF-Anenne (5) in einen metallischen, nach außen gewandten Hohlraum (2) des besagten Überwachungsmoduls, der durch einen Schutzdeckel (4) aus transparentem Material, welches elektromagnetischen Wellen gegenüber permissiv ist, verschlossen wird, und
- die Konfiguration besagter PIF-Antenne (5), welche eine Massefläche enthält, die um ein Strahlungselement gelegt wird, das in einem Träger mit mehreren Schichten unterschiedlichen Materials enthalten ist.
